# EUROPEAN PATENT APPLICATION

(11) **EP 0 572 916 A1**
(43) Date of publication of application: **08.12.1993**
(21) Application number: 93108550.0
(22) Date of filing: 26.05.1993
(51) Int. Cl.: B60J 7/043

(54) **Frame Cover for motor vehicle sunroof**

(30) Priority: 26.05.1992 IT MI920534
(71) Applicant: AUTOTEK S.r.l., I-64100 Teramo (IT)
(72) Inventor: Sinelli, Edoardo, I-20133 Milano (IT)
(74) Representative: Modiano, Guido, Dr.-Ing.

(57) **Abstract**

Frame cover (3) for motor vehicle sunroof, substantially having the shape of a molding with a flexible peripheral outer edge (5) suitable to rest on the internal trimming of the car roof (1) and thus providing a partially tight seal against the internal trimming of the motor vehicle roof; the frame cover is provided with elastic fixing elements (4) fitting in appropriate holes formed in the sunroof frame.

## Description

The present invention relates to a frame cover for motor vehicle sunroof.

Frame covering moldings such as those used for car windows, sunroofs and the like, usually have the disadvantage that they cannot be adapted perfectly to the various shapes of the car bodies, since they have a considerable thickness and are substantially rigid. Accordingly, it is often necessary to perform adaptations of these elements made of plastic material which entail a certain cost in labor. Automatic flexible screws or pins are often used, but it is always necessary to insert a gasket between the two parts to be connected in order to obtain an aesthetically acceptable mating between the sunroof frame and the sunroof frame cover.

The aim of the present invention is to provide a sunroof frame cover for motor vehicle sunroof which is substantially shaped like a molding, with a flexible peripheral outer edge suitable to rest on the internal trimming of the car roof, thus providing a partially tight closure against said internal trimming of the car roof, and is provided with fixing elements with elastic pins which fit in appropriate holes provided in the sunroof frame. The sunroof frame cover is made of plastic material, for example flexible polyamide, and it can be gray or of any other color suitable to conceal the presence of said element as much as possible.

Further advantages and characteristics of the present invention will become apparent from the following detailed description thereof and from the accompanying drawings and claims.

The figures are described as follows:
figure 1 is an assembly sectional view, illustrating the method for assembling the sunroof frame and the sunroof frame cover;
figure 2 is a detailed sectional view of the sunroof frame cover profile;
figure 3 is a plan view of the sunroof frame cover, illustrating its entire structure.

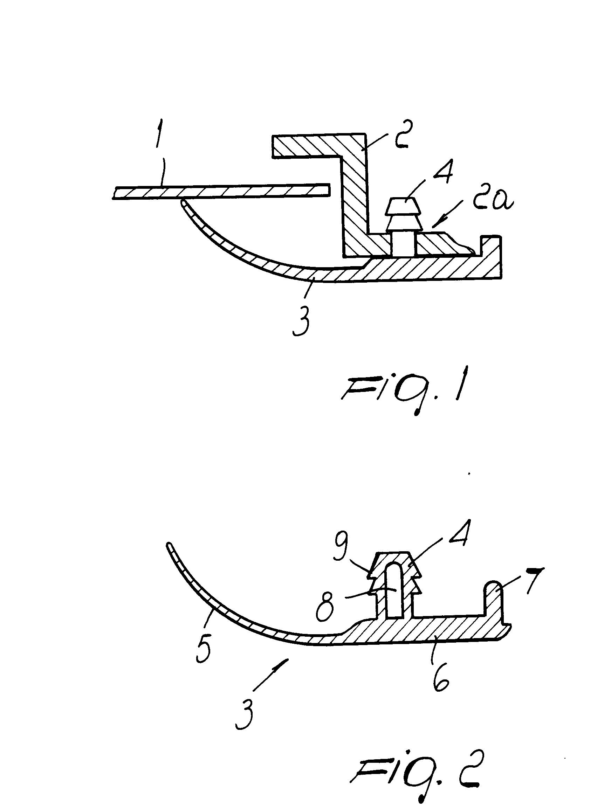

Figure 1 shows the internal trimming of the roof of the car 1 and the sunroof frame 2, which is a peripheral molding having an approximately Z-shaped cross-section, with mutually orthogonal sides, and provided with holes 2A for fixing the sunroof frame cover, designated by the reference numeral 3 and fixed to the sunroof frame 2 by means of elastic pins 4 inserted in the circular holes 2A of the sunroof frame 2.

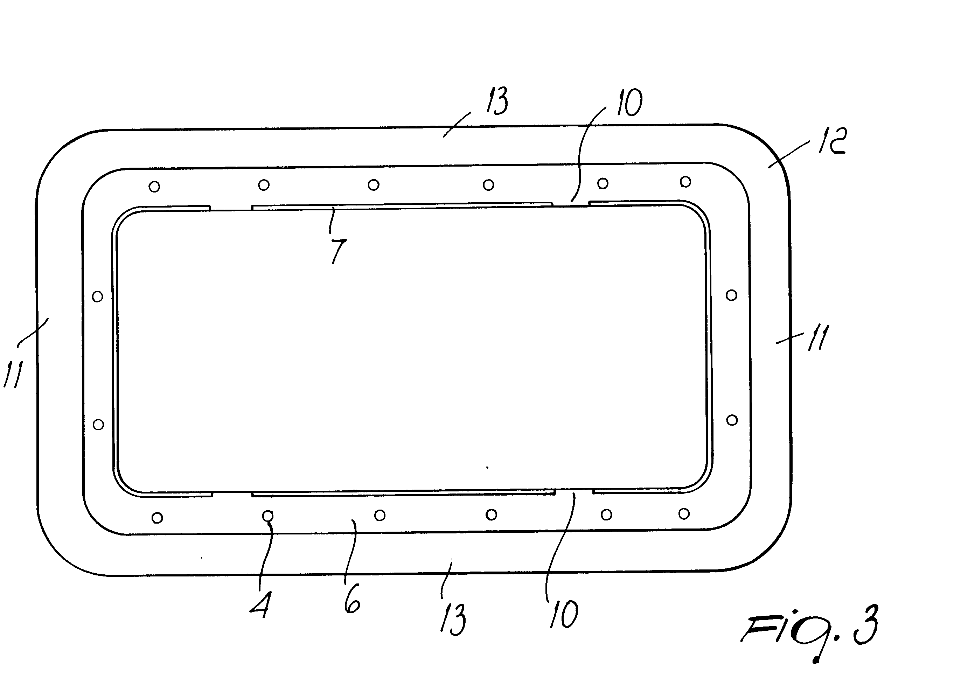

Figure 2 illustrates in detail the cross-section of the sunroof frame cover 3, which is formed by a flexible edge 5 whose thickness decreases towards the outside; said edge is monolithic with the edge 6, which is thicker than the edge 5, and has a further edge 7 which is at right angles to the edge 6 and runs along the entire peripheral region of the sunroof frame cover 3.

In the region above the edge 6 there are provided flexible pins 4 which are spaced with a constant pitch, have a substantially cylindrical shape and are provided with an internal cavity 8 which makes them flexible; at least two wedge-shaped teeth 9 are formed on said pins and extend peripherally around the pin 4. Holes 2A are provided on the sunroof frame 2 and are sized appropriately in order to elastically accommodate the pins 4, which are inserted in said holes 2A (figure 3) since they are deformable by virtue of their cavity 8.

Figure 3 shows the general shape of the sunroof frame cover 3, provided with straight elements 11 (short sides) and 13 (long sides), between which curved blending portions 12, shaped like a quarter of a circle or of an ellipse, are interposed.

The edge 7 is interrupted in at least four points by the grooves 10, which allow easy disassembly of the sunroof frame cover 3 by simply inserting a screwdriver and by applying a certain force in said slots to extract the pins 4, overcoming their elastic resistance.

The entire sunroof frame cover 3 is obtained by monolithic molding, including the fixing pins 4, and therefore allows considerably simplified assembly with respect to known types by means of simple pressure on the pins 4.

Furthermore, by virtue of the flexible outer edge 5 the sunroof frame cover 3 adapts to any kind of motor vehicle, creating an optimum trimming, with no unaesthetic steps, in the internal part of the motor vehicle.

The present invention has been described in terms of a specific embodiment. However, it must be understood that this embodiment is given merely by way of example and that the invention is not necessarily limited thereto.

Modifications and variations will be evident from this disclosure and may be used without abandoning the aim of the present invention, as those skilled in the art can easily understand.

In accordance with the above, such variations and modifications of the disclosed product are considered to be included within the scope and aim of the present invention and of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Frame cover (3) for motor vehicle sunroof, characterized in that it comprises a body which is substantially shaped as a molding with a flexible peripheral outer edge (5) whose thickness decreases from the inside outwards, said frame cover being adapted to rest on the internal trimming of the car roof (1), so as to provide a partially tight closure against said internal trimming of the car roof, and being provided with fixing elements with elastic pins (4) rigidly coupled thereto and engageable in corresponding holes (2A) formed in the sunroof frame (2).

2. Frame cover for sunroof according to claim 1, characterized in that it is molded monolithically in a plastic material such as polyamide or the like.

3. Frame cover for sunroof according to claims 1 and 2, characterized in that it comprises engagement devices in the form of flexible pins (4) provided with an internal cavity (8) which makes them flexible and with a series of at least two conical peripheral teeth (9) for engagement with the related holes (2A) of said sunroof frame (2).

4. Frame cover for sunroof according to the preceding claims, characterized in that it comprises a flexible outer edge (5) whose thickness decreases gradually towards the peripheral region, said edge adapting to any kind of curvature of car body panels, said cover having a rigid supporting region (6) acting as bearing structure and connectable to a sunroof frame (2) by means of the flexible pins (4) which are rigidly coupled to said supporting region (6), and having a peripheral edge on the inner part (7), which is interrupted in discrete points by notches (10) for disassembly of said sunroof frame cover (3).
